# EUROPÄISCHE PATENTANMELDUNG

(11) **EP 2 431 154 A2**
(43) Veröffentlichungstag der Anmeldung: **21.03.2012**
(21) Anmeldenummer: 11007699.9
(22) Anmeldetag: 21.09.2011
(51) Int. Cl.: B29C 51/26, B29C 51/46

(54) **Verfahren zum Betreiben einer Vorrichtung zum Herstellen von Formteilen aus erwärmter thermoplastischer Kunststofffolie**

(30) Priorität: 21.09.2010 DE 102010046164
(71) Anmelder: ILLIG Maschinenbau GmbH & Co. KG, 74081 Heilbronn (DE)
(72) Erfinder: Zimmermann, Andreas, 74357 Bönnigheim (DE)

(57) **Zusammenfassung**

Ein Verfahren zum Betreiben einer Vorrichtung zum Herstellen von Formteilen aus erwärmter thermoplastischer Kunststofffolie soll so ausgebildet werden, dass die Gesamttaktzeit bei allen Maschineneinstellungen konstant bleibt.

Erreicht wird dies dadurch, dass in einer Betriebsart der Zeit für den Herstellvorgang automatisch eine variable Totzeit angefügt wird, um eine konstante Gesamttaktzeit darzustellen.

## Beschreibung

Die Erfindung betrifft ein Verfahren zum Betreiben einer Vorrichtung zum Herstellen von Formteilen aus erwärmter thermoplastischer Kunststofffolie.

### Stand der Technik

Aus der Druckschrift DE 10 2006 045 027.2 B4 ist eine Vorrichtung und ein Verfahren bekannt, wobei die Vorrichtung zum Herstellen von Formteilen aus erwärmter thermoplastischer Kunststofffolie mit Temperatursensoren ausgerüstet ist, die Temperaturen innerhalb und außerhalb der Vorrichtung erfassen und das Verfahren zum Erwärmen von thermoplastischer Kunststofffolie so gestaltet ist, dass ein Temperaturprofil in der thermoplastischen Kunststofffolie konstant gehalten wird. Somit kann die Qualität von Formteilen bei schwankenden klimatischen Bedingungen durch die Steuerung der Vorrichtung automatisch konstant gehalten werden. So wird der Anteil der Formteile reduziert, die produziert werden und nicht den Qualitätsanforderungen entsprechen.

Die Druckschrift DE 10 2006 006 176.4 B4 zeigt ein Verfahren zum Optimieren der Taktzeit einer Vorrichtung zum Herstellen von Formteilen aus erwärmter thermoplastischer Kunststofffolie. Dabei werden in einer Steuerung der Vorrichtung Prozessschritte der Einrichtungen so überschnitten, dass sich in Abhängigkeit der Geometrie der Formteile eine minimale Taktzeit zum Herstellen der Formteile ergibt.

Aus der Druckschrift DE 100 21 730 A1 ist es bekannt, eine nach dem Stand der Technik kontinuierlich arbeitende Schnecken-Compoundiermaschine diskontinuierlich anzutreiben, damit die Compoundiermaschine mit einer nachfolgenden, taktweise arbeitende Maschine zur Weiterverarbeitung der heißen Kunststoffmasse so zusammenarbeitet, dass die heiße Kunststoffmasse der Nachfolgemaschine ohne Energieverlust zugeführt wird. Dies wird dadurch erreicht, dass die Antriebe der Compoundiermaschine die gleichen Taktzeiten aufweist wie die Maschine zur Weiterbearbeitung. Dies umfasst die Anpassung der Hochlauf-, Produktions- und Bremszeiten der Antriebe der Compoundiermaschine an die Gegebenheiten der Antriebe der Nachfolgemaschine.

Die Druckschrift DE 199 61 743 A1 zeigt eine Regelung der Produktionsgeschwindigkeit für einen Extruder zur Produktion von thermoformbarer Kunststofffolie, dessen Produktionsgeschwindigkeit an die Verarbeitungsgeschwindigkeit der nachgeschalteten Thermoformmaschine angepasst ist. Dieses geschieht dadurch, dass über Lichtschranken die Höhe einer Schlaufe aus Kunststofffolie zwischen Extruder und Thermoformmaschine abgetastet wird. Sinkt die Schlaufe, so erkennt eine Lichtschranke die tiefe Position und die Produktionsgeschwindigkeit des Extruders wird gedrosselt. Reduziert sich die Tiefe der Schlaufe, so wird dieses zweite Grenzniveau von einer weiteren Lichtschranke erkannt und die Produktionsgeschwindigkeit des Extruders wird erhöht, so dass das Niveau der Schlaufe zwischen den beiden Schaltpunkten der Lichtschranken pendelt und so die Produktionsgeschwindigkeit des Extruders sich kontinuierlich an die Verarbeitungsgeschwindigkeit der Thermoformmaschine angleicht.

Die Druckschrift EP 1 747 873 A1 offenbart einen Extruder, der thermoformbare Kunststofffolie produziert. Der Extruder verfügt über eine Einrichtung zum Schneiden der Kunststofffolie, die so ausgerichtet ist, dass die entstehenden Folienstücke Erstreckungen aufweisen, die an das Formwerkzeug einer ebenfalls nachgeschalteten Thermoformmaschine angepasst sind. Eine Transporteinheit bewegt die Folienstücke vom Extruder zur Thermoformmaschine. Die Produktionsgeschwindigkeit des Extruders ist an die Taktgeschwindigkeit der Thermoformmaschine so angepasst, dass die Thermoformmaschine die bereitgestellten Folienstücke von der Transporteinheit übernimmt und verarbeitet.

Aus der Druckschrift WO 2009/109178 A1 ist es bekannt, Parameter, die für eine Produktion von Formteilen aus thermoformbarer Kunststofffolie auf einer Thermoformmaschine mit definierten Qualitätsmerkmalen erforderlich sind über Messwerte iterativ zu ermitteln. Die Iteration wird alternativ durch die Maschinensteuerung oder durch den Maschinenbediener durchgeführt. Ebenfalls wird vorgeschlagen, dabei einen Versuchsplan zu verwenden. Die Qualitätsmerkmale werden alternativ in der Steuerung hinterlegt oder durch den Maschinenbediener eingegeben. Weiterhin wird offenbart, dass die Steuerung die Maschinenparameter durch die veränderten Qualitätsmerkmale anpasst.

Weiterhin ist aus dem Stand der Technik bekannt, dass die Steuerung einer Vorrichtung zum Herstellen von Formteilen aus erwärmter thermoplastischer Kunststofffolie aus den Eigenschaften der Kunststofffolie und der zu erzeugenden Formteile eine geeignete Einstellung der Temperatur der Heizstation ermittelt, so dass der Vorgang des Optimierens zur Erreichung einer gewünschten Qualität der Formteile zeitlich verkürzt wird.

Der bekannte Stand der Technik gibt Verfahren an, die geeignet sind, die Qualität der produzierten Formteile bei schwankenden klimatischen Bedingungen konstant zu halten. Ebenfalls ist es bekannt, mithilfe von Überschneidungen von Prozessschritten Taktzeit einzusparen. Es wurde gezeigt, wie hintereinander geschaltete Maschinen so angepasst werden, dass sie zusammenarbeiten können. Weiterhin wurde offenbart, wie in Abhängigkeit von Kunststofffolie und Formteil die Heizstation so eingestellt wird, dass die Optimierungsphase verringert wird.

### Aufgabenstellung

Der Erfindung liegt die Aufgabe zugrunde, ein Verfahren zum Herstellen von Formteilen aus erwärmter thermoplastischer Kunststofffolie zu verbessern.

Die Aufgabe wird erfindungsgemäß gelöst durch ein Verfahren nach dem Anspruch 1. Vorteilhafte Ausgestaltungen der Erfindung lassen sich aus den übrigen, rückbezogenen Unteransprüchen sowie der nachfolgenden Beschreibung entnehmen.

### Ausführungsbeispiel

Vorgeschlagen wird ein Verfahren zum Herstellen von Formteilen aus erwärmter thermoplastischer Kunststofffolie mit einer Vorrichtung, umfassend mindestens eine Heizstation und eine Formstation.

In einer Betriebsart wird der Zeit für den Herstellvorgang 2 automatisch eine variable Totzeit 3 angefügt. Damit wird erreicht, dass die Gesamttaktzeit 4 für einen Produktionszyklus stets konstant bleibt. Die Totzeit 3 wird von der Steuerung automatisch berechnet. Die Totzeit 3 ist dabei in Abhängigkeit von den Einstellwerten der für die Formung relevanten Maschinenbewegungen und zeitlichen Abläufe variabel, da sich durch die Wahl der Einstellwerte die Zeit für den Herstellvorgang 2 ändert.

Bei Vorrichtungen nach dem Stand der Technik ändert sich mit jeder Variation eines Einstellwertes die Gesamttaktzeit 4. Dies hat zur Folge, dass sich zwangsläufig auch die Heizzeit ändert, bei der die Kunststofffolie sich im Bereich der Heizstation zur Erwärmung befindet. Das Formteil ändert sich somit in seinen Eigenschaften und Qualitätsmerkmalen immer gemäß der Variation des Einstellwertes und der Heizzeit zugleich. Der Bediener kann also nicht unterscheiden, ob die Änderungen der Eigenschaften und Qualitätsmerkmale des Formteils durch die Variation des Einstellwertes oder der Heizzeit verursacht wurden.

Der Vorteil des Verfahrens ist darin zu sehen, dass bei einer Variation von Einstellungen der Vorrichtung ausschließlich der Effekt der Variation die geänderten Eigenschaften und Qualitätsmerkmale des Formteils bestimmt.

Dadurch kann schneller und eindeutiger die Optimierungsstrategie festgelegt werden. Die Optimierungsphase, die benötigt wird, um Formteile zu produzieren, die den Qualitätsanforderungen entsprechen, wird verkürzt.

Der gesicherte Zustand der konstanten Gesamttaktzeit 4 kann weiterhin auch so genutzt werden, dass die konstante Gesamttaktzeit 4 sehr lang eingestellt wird, damit die Anzahl der Formteile, die während der Optimierungsphase produziert wird und den Qualitätsanforderungen nicht entspricht, reduziert wird.

Eine weitere Art der Nutzung der konstanten Gesamttaktzeit 4 ist die Produktion von Formteilen mit einem vorgeschalteten Extruder mit bauartbedingt konstantem Foliendurchsatz. Müssen beim Stand der Technik bei der Produktion von Formteilen mit einem vorgeschalteten Extruder die Einstellungen der Vorrichtung für die Produktion von Formteilen mit einem unbekannten Werkzeug angepasst werden, so muss nach der Variation eines ersten Einstellwertes ein zweiter Einstellwert gegenläufig variiert werden, damit die Gesamttaktzeit konstant bleibt und der konstante Foliendurchsatz des Extruders verarbeitet werden kann. Dieses Vorgehen erschwert die Optimierung der Qualität der Formteile.

Es ist weiterhin vorgesehen, dass in der Betriebsart die für die Formung relevanten Maschinenbewegungen und zeitlichen Abläufe von der Steuerung der Vorrichtung so ermittelt werden, dass die für den Herstellvorgang (2) minimale Zeit erreicht wird.

Es ist weiterhin vorteilhaft, dass die Totzeit 3 nach dem Öffnen der Formstation beginnt, damit nicht nur eine konstante Heizzeit, sondern auch eine konstante Kühlzeit der Formteile gewährleistet ist. Bliebe die Formstation während der Totzeit 3 geschlossen, würde während des Ablaufens der Totzeit 3 die Kühlzeit verlängert.

Eine weitere Ausprägung zeigt, dass in der Betriebsart der Wert der konstanten Gesamttaktzeit (4) durch einen Bediener in Form einer gewünschten Taktzahleingabe eingestellt wird. Der Bediener kann so eine Taktzahl eingeben, die beispielsweise für seine Bedürfnisse während der Optimierungsphase optimal ist. Er kann die Qualität der Formteile bewerten und die Funktion von weiteren Arbeitsstationen beobachten. Weiterhin wird in der Betriebsart die Erstreckung der variablen Totzeit (3) automatisch durch die Steuerung der Vorrichtung berechnet.

Erfindungsgemäß ist es vorgesehen, dass in der Betriebsart die Optimierung der Qualität der Formteile durchgeführt wird.

Weiterhin ist vorgesehen, dass während der Zeit der Optimierung der Qualität der Formteile die Taktzahl unter die maximal mögliche Taktzahl verringert wird, um die Menge der Formteile zu verringern, die nicht den Qualitätsanforderungen entspricht. Es ist ebenfalls vorteilhaft, dass in der Betriebsart die Produktion von Formteilen im Inline-Verfahren mit einem vorgeschalteten Extruder durchgeführt wird.

Eine weitere vorteilhafte Ausprägung sieht vor, dass in der Betriebsart der Produktion von Formteilen im Inline-Verfahren mit einem vorgeschalteten Extruder der Durchsatz der Vorrichtung als Produkt aus Gesamttaktzeit (4) und dem Vorschub der Vorrichtung dem Durchsatz des Extruders entspricht.

Vorteilhaft ist es ebenfalls, dass in der Betriebsart der Produktion von Formteilen im Inline-Verfahren mit einem vorgeschalteten Extruder die Gesamttaktzeit (4) stets eine ausreichend große variable Totzeit (3) aufweist, damit Veränderungen in den Einstellungen der Vorrichtung, die die Zeit für den Herstellvorgang (2) variieren, die Gesamttaktzeit (4) unbeeinflusst lassen.

Die Eingabe der Einstellungen beim erfindungsgemäßen Verfahren in die Steuerung der Vorrichtung geschieht in einer Ausprägung durch den Bediener. Dies ist insbesondere dann vorteilhaft, wenn ein Werkzeug zum Herstellen der Formteile bekannt ist und der Bediener von einem bereits vorhandenen Einstelldatensatz ausgeht, den er in die Steuerung der Vorrichtung beispielsweise per Datenträger eingeben kann. Eine Optimierungsphase ist gegebenenfalls dann erforderlich, wenn bei einem bekannten Werkzeug eine unbekannte Kunststofffolie verwendet wird.

Ebenfalls ist vorgesehen, dass die Eingabe von Einstellungen in die Steuerung der Vorrichtung in der Betriebsart nur teilweise durch den Bediener erfolgt und nur die Eingabe von Einstellungen zur Beschreibung von Eigenschaften der Formteile und Kunststofffolien umfasst und die Ermittlung der weiteren Einstellungen zur Durchführung des Verfahrens automatisch mittels Berechnungen durch die Steuerung der Vorrichtung erfolgt. Dies ist insbesondere dann vorteilhaft, wenn noch keine Erfahrung mit einem neuen Werkzeug vorliegt.

Weiterhin ist es vorteilhaft, das Verfahren so auszuprägen, dass das Ende der Betriebsart und damit der Wechsel in die Produktion durch eine Eingabe eines Befehles durch den Bediener erfolgt.

Ausführungsbeispiele der Erfindung sind nachfolgend anhand der schematischen Darstellungen näher beschrieben.

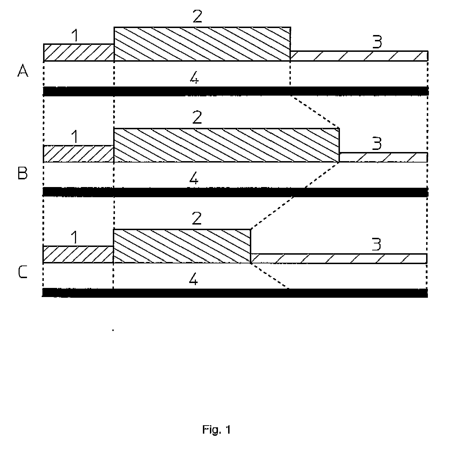

**Fig. 1** zeigt in der Zeile **A** eine Zusammensetzung der Taktzeit in der Betriebsart. Die Summe aus Folientransportvorgang **1,** Herstellvorgang **2** und Totzeit 3 ergibt die Gesamttaktzeit 4. Ändert der Bediener, wie in Zeile **B** dargestellt, z. B. zum Zweck der Optimierung der Qualität der Formteile Einstellungen an der Vorrichtung zum Herstellen von Formteilen, die eine verlängernde Auswirkung haben auf die zeitliche Erstreckung des Herstellvorgangs **2,** so reduziert die Steuerung der Vorrichtung automatisch die Totzeit **3,** damit die Gesamttaktzeit **4** konstant bleibt. Umgekehrt verlängert die Steuerung der Vorrichtung die Totzeit **3** automatisch, wenn die Änderungen der Einstellungen sich reduzierend auf die zeitliche Erstreckung des Herstellvorgangs **3** auswirken, wie es in Zeile **C** der **Fig. 1** dargestellt ist. Die Gesamttaktzeit 4 bleibt somit stets konstant und damit auch die Energieübertragung der Heizeinrichtung auf die Kunststofffolie.

In einer anderen erfinderischen Ausprägung ermittelt die Steuerung aus der Eingabe der gewünschten Taktzahl durch den Bediener die daraus resultierende Gesamttaktzeit **4.** Die Steuerung fährt die Vorrichtung so, dass die Gesamttaktzeit **4,** steuerungstechnisch beispielsweise repräsentiert durch einen Timerbaustein der Steuerung, den Folientransportvorgang **1** startet. Das Ende des Folientransportvorgangs **1** startet den Herstellvorgang **2.** Die Gesamttaktzeit **4** läuft nach dem Ende des Herstellvorgangs **2** weiter und startet an ihrem berechneten Ende den nächsten Folientransportvorgang **1.** Die an den Herstellvorgang **2** angehängte Totzeit **3** ist die Differenz aus weiterlaufender Gesamttaktzeit **4** und der bisher verstrichenen Summe der Zeiten für Transportvorgang 1 und Herstellvorgang **2.** Die Totzeit **3** wird nicht separat berechnet, sondern sie ergibt sich aus der vorgenannten Differenz der Gesamttaktzeit **4** und der Summe der Zeiten aus den Teilschritten Transportvorgang **1** und Herstellvorgang **2.**

### Bezugszeichenliste

- 1: Folientransportvorgang
- 2: Herstellvorgang
- 3: Totzeit
- 4: Gesamttaktzeit

## Patentansprüche

1. Verfahren zum Betreiben einer Vorrichtung zum Herstellen von Formteilen aus erwärmter thermoplastischer Kunststofffolie umfassend mindestens eine Heizstation und eine Formstation, **dadurch gekennzeichnet, dass** in einer Betriebsart der Zeit für den Herstellvorgang (2) automatisch eine variable Totzeit (3) angefügt wird, um eine konstante Gesamttaktzeit (4) darzustellen.

2. Verfahren gemäß Anspruch 1, **dadurch gekennzeichnet, dass** in der Betriebsart die Totzeit (3) nach dem Öffnen der Formstation beginnt.

3. Verfahren gemäß Anspruch 1, **dadurch gekennzeichnet, dass** in der Betriebsart der Wert der konstanten Gesamttaktzeit (4) durch einen Bediener in Form einer gewünschten Taktzahleingabe eingestellt wird.

4. Verfahren gemäß Anspruch 1, **dadurch gekennzeichnet, dass** in der Betriebsart die Erstreckung der variablen Totzeit (3) automatisch durch die Steuerung der Vorrichtung berechnet wird.

5. Verfahren gemäß Anspruch 1, **dadurch gekennzeichnet, dass** in der Betriebsart die Optimierung der Qualität der Formteile durchgeführt wird.

6. Verfahren gemäß Anspruch 5, **dadurch gekennzeichnet, dass** während der Zeit der Optimierung der Qualität der Formteile die Taktzahl unter die maximal mögliche Taktzahl verringert wird, um die Menge der Formteile zu verringern, die nicht den Qualitätsanforderungen entspricht.

7. Verfahren gemäß Anspruch 1, **dadurch gekennzeichnet, dass** in der Betriebsart die Produktion von Formteilen im Inline-Verfahren mit einem vorgeschalteten Extruder durchgeführt wird.

8. Verfahren gemäß Anspruch 7, **dadurch gekennzeichnet, dass** in der Betriebsart während der Produktion von Formteilen im Inline-Verfahren mit einem vorgeschalteten Extruder der Durchsatz der Vorrichtung als Produkt aus Gesamttaktzeit (4) und dem Vorschub der Vorrichtung dem Durchsatz des Extruders entspricht.

9. Verfahren gemäß Anspruch 8 **dadurch gekennzeichnet, dass** in der Betriebsart der Produktion von Formteilen im Inline-Verfahren mit einem vorgeschalteten Extruder die Gesamttaktzeit (4) stets eine ausreichend große variable Totzeit (3) aufweist, damit Veränderungen in den Einstellungen der Vorrichtung, die die Zeit für den Herstellvorgang (2) variieren, die Gesamttaktzeit (4) unbeeinflusst lassen.

10. Verfahren gemäß Anspruch 1, **dadurch gekennzeichnet, dass** die Eingabe sämtlicher Einstellungen in die Steuerung der Vorrichtung in der Betriebsart durch den Bediener erfolgt.

11. Verfahren gemäß Anspruch 1, **dadurch gekennzeichnet, dass** die Eingabe von Einstellungen in die Steuerung der Vorrichtung in der Betriebsart nur teilweise durch den Bediener erfolgt und nur die Eingabe von Einstellungen zur Beschreibung von Eigenschaften der Formteile und Kunststofffolien umfasst und die Ermittlung der weiteren Einstellungen zur Durchführung des Verfahrens automatisch mittels Berechnungen durch die Steuerung der Vorrichtung erfolgt.

12. Verfahren gemäß Anspruch 1, **dadurch gekennzeichnet, dass** der Wechsel der Betriebsart durch eine Eingabe eines Befehles durch den Bediener erfolgt.
